(19) Europäisches Patentamt / European Patent Office / Office européen des brevets

(11) **EP 3 253 628 B1**

(12) **EUROPÄISCHE PATENTSCHRIFT**

(45) Veröffentlichungstag und Bekanntmachung des Hinweises auf die Patenterteilung:
**02.09.2020   Patentblatt 2020/36**

(21) Anmeldenummer: **16701103.0**

(22) Anmeldetag: **15.01.2016**

(51) Int Cl.:
**B60T 8/17** (2006.01)     **B60T 8/26** (2006.01)
**B62K 11/00** (2006.01)     **B60W 40/112** (2012.01)
**B60W 30/18** (2012.01)     **B60W 10/184** (2012.01)

(86) Internationale Anmeldenummer:
**PCT/EP2016/050810**

(87) Internationale Veröffentlichungsnummer:
**WO 2016/124375 (11.08.2016 Gazette 2016/32)**

(54) **VERFAHREN ZUR BESTIMMUNG DES SCHRÄGLAGENWINKELS EINES ZWEIRADS**

METHOD FOR DETERMINING THE ROLL ANGLE OF A TWO-WHEELED VEHICLE

PROCÉDÉ DE DÉTERMINATION DE L'ANGLE DE ROULIS D'UN DEUX-ROUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.02.2015   DE 102015202115**

(43) Veröffentlichungstag der Anmeldung:
**13.12.2017   Patentblatt 2017/50**

(73) Patentinhaber: **Robert Bosch GmbH**
**70442 Stuttgart (DE)**

(72) Erfinder:
• LICH, Thomas
  73733 Esslingen (DE)
• D'ADDETTA, Gian Antonio
  70563 Stuttgart (DE)

(56) Entgegenhaltungen:
EP-A1- 2 641 819     WO-A2-2005/107358
DE-A1- 10 238 526     DE-A1-102008 043 794

## Beschreibung

Die Erfindung bezieht sich auf ein Verfahren zur Bestimmung des Schräglagenwinkels eines Zweirads.

Stand der Technik

Wird ein Motorrad bei Kurvenfahrt am Vorderrad gebremst, resultiert hieraus ein das Motorrad aufrichtendes Lenkstörmoment um die Lenkachse des Motorrads, wodurch dieses auf einen größeren Kurvenradius gezwungen wird. Das Lenkstörmoment kommt durch die Schräglage des Motorrads und dem zur Seite des Reifenmantels hin wandernden Reifenaufstandspunkt sowie der im Reifenaufstandspunkt wirkenden Bremskraft zustande. Mit zunehmender Schräglage vergrößert sich der Störkrafthebelarm und damit das das Motorrad aufrichtende Moment.

Um die Fahrsicherheit beim Bremsvorgang zu erhöhen, ist es aus der DE 10 2011 076 640 A1 bekannt, das vom Fahrer angeforderte Radbremsmoment bei Kurvenfahrt selbsttätig zwischen Vorderrad und Hinterrad zu verteilen. Hierdurch können bei unverändertem Gesamt-Bremsmoment entgegengesetzt gerichtete Lenkstörmomente am Vorder- und Hinterrad erzeugt werden, die sich zumindest teilweise kompensieren. Voraussetzung ist jedoch die Kenntnis des Schräglagenwinkels, welche bei der DE 10 2011 076 640 A1 mithilfe eines Schräglagensensors im Motorrad gemessen wird.

Aus der DE 10 2008 043 794 A1 ist ein Verfahren zum Bestimmen des Schräglagenwinkels eines Zweiradfahrzeugs bekannt. Der Schräglagenwinkel wird auf der Basis der ermittelten Querbeschleunigung und der in Richtung der Hochachse des Zweirads ermittelten Vertikalbeschleunigung berechnet.

Aus der EP 2 641 819 A1 ist ebenfalls die Ermittlung des Schräglagenwinkels eines Zweirades bekannt, der auf der Basis einer Drehgeschwindigkeitsdifferenz zwischen vorderem und hinterem Rad und des Lenkwinkels berechnet wird.

Aus der WO 2005/107358 A2 ist ein Verfahren zur Bestimmung des Neigungswinkels eines Zweirades bekannt, bei dem der Neigungswinkel aus dem Verhältnis der Erdbeschleunigung zu einer gemessenen Beschleunigung entlang der Hochachse des Zweirades errechnet wird.

Offenbarung der Erfindung

Der Erfindung liegt die Aufgabe zugrunde, mit einfachen Maßnahmen den Schräglagenwinkel in einem Zweirad mit hoher Genauigkeit zu bestimmen.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren kann bei Zweirädern, insbesondere motorisierten Zweirädern wie Motorrädern, Motorrollern oder dergleichen, aber auch bei Fahrrädern mit oder ohne elektromotorischen Antrieb eingesetzt werden und dient zur Bestimmung des Schräglagenwinkels, insbesondere bei Kurvenfahrten des Zweirades. Auf der Grundlage des ermittelten Schräglagenwinkels können vorzugsweise selbsttätig im Fahrzeug unterschiedliche Funktionen bzw. Funktionalitäten durchgeführt werden, welche direkt oder indirekt zu einer Verbesserung der Fahrsicherheit führen. So ist es beispielsweise möglich, als Funktion des Schräglagenwinkels den Bremsdruck an der Vorderrad- und/oder an der Hinterradbremse des Zweirades selbsttätig zu modulieren, um Lenkstörmomente im Zweirad zu reduzieren oder die Wirkung von Lenkstörmomenten zu minimieren.

Bei dem erfindungsgemäßen Verfahren wird der Schräglagenwinkel als Funktion der Achslast an mindestens einem Rad des Zweirades berechnet. Zunächst wird in einem ersten Schritt die Achslast an mindestens einem Rad ermittelt und anschließend in einem zweiten Schritt der Schräglagenwinkel als Funktion der Achslast berechnet. Die Achslast wird in einfacher und präziser Weise unmittelbar sensorisch ermittelt, beispielsweise mithilfe eines Sensors, der zwischen einer das Fahrzeugrad aufnehmenden Gabel und der Radachse des Rades angeordnet ist. Bei der Achslast handelt es sich um eine Kraft, die als Resultierende von Fliehkraft und Gewichtskraft in der Radebene wirksam ist und gegenüber der Hochachse, welche parallel zum Gewichtskraftvektor gerichtet ist, um den Schräglagenwinkel geneigt ist. Die Achslast wird erfindungsgemäß unmittelbar sensorisch ermittelt. Mittels der Achslastinformation können auch zusätzliche, vorzugsweise auf selbsttätige Weise unterschiedliche Funktionen bzw. Funktionalitäten im Fahrzeug

durchgeführt werden, welche direkt oder indirekt zu einer Verbesserung der Fahrsicherheit führen.

Bei der Ermittlung des Schräglagenwinkels können gegebenenfalls ein Neigungswinkel und ein Korrekturwinkel berücksichtigt werden, welche addiert den Schräglagenwinkel ergeben. Der Neigungswinkel wird aus der Achslast bestimmt, der Korrekturwinkel hängt von der Reifenbreite ab, da der Reifenaufstandspunkt bei Kurvenfahrt nicht in der Reifenmitte, sondern im Reifenseitenbereich liegt. Der Neigungswinkel hängt unmittelbar von der Achslast ab, darüber hinaus auch von der aktuellen Zweiradgeschwindigkeit sowie dem Kurvenradius, wobei die Zweiradgeschwindigkeit vorzugsweise aus Raddrehzahlsensoren bestimmt wird und der Kurvenradius aus einer Abschätzung, beispielsweise in Abhängigkeit des aktuellen Lenkwinkels ermittelt wird.

Die Achslast wird an mindestens einem Rad des Zweirades ermittelt und der Berechnung des Schräglagenwinkels zugrunde gelegt. In einer bevorzugten Ausführung wird die Achslast zumindest am Vorderrad ermittelt, wobei grundsätzlich auch eine ausschließliche Ermittlung der Achslast am Hinterrad für die Berechnung des Schräglagenwinkels in Betracht kommt. Gemäß bevorzugter Ausführung wird jedoch die Achslast sowohl am Vorderrad als auch am Hinterrad ermittelt und für die Berechnung des Schräglagenwinkels herangezogen.

Aus der Achslastmessung kann eine Kurvenvon einer Geradeausfahrt unterschieden werden, da die Achslast in der Kurvenfahrt höher ist. Der Schräglagenwinkel kann in einem Fahrzeugaggregat verwendet werden, insbesondere im Bremssystem, um beispielsweise im Rahmen einer Bremsregelung den Bremsdruck am Vorderrad und/oder am Hinterrad in der Weise selbsttätig einzustellen, dass die Fahrstabilität erhöht wird. Als Bremsregelsystem kommt insbesondere ein Antiblockiersystem ABS in Betracht.

Der aus der Achslast ermittelte Schräglagenwinkel stellt eine unabhängige Schätzgröße dar, die gegebenenfalls auch als Korrektur- oder Plausibilisierungsgröße für anderweitige Schätz- bzw. Berechnungswerte verwendet werden kann.

Allgemein kann bei Kenntnis des Schräglagenwinkels ein Wegrutschen des Vorder- und des Hinterrades frühzeitig erfasst und entsprechende Unfall vermeidende oder Unfallfolgen mindernde Maßnahmen eingeleitet werden. Neben den bereits erwähnten Eingriffen in das Bremssystem kann beispielsweise auch eine Traktionskontrolle mit einem motorischen Eingriff durchgeführt werden. Auch ist es möglich, einen sich anbahnenden Unfall aufgrund des Wegrutschens eines Rades zu erkennen und beispielsweise selbsttätig einen Notruf (eCall) abzusetzen oder beispielweise andere Verkehrsteilnehmer zu informieren oder zu warnen.

Über die Ermittlung der Achslast können lastabhängige Regelstrategien, insbesondere im Hinblick auf die Bremsregelung und/oder die Traktionskontrolle durchgeführt werden. Es ist somit beispielsweise möglich, in Abhängigkeit des Gesamtgewichtes und gegebenenfalls der Gewichtsverteilung auf dem Motorrad bei Fahrten mit und ohne Sozius Regelstrategien anzupassen und durchzuführen.

Über die Ermittlung der Achslast kann auch eine mögliche Überschreitung des zulässigen Gesamtgewichtes des Motorrads erfasst werden, was über eine Warnmeldung angezeigt werden kann. Gemäß einer weiteren zweckmäßigen Ausführung kann bei Überschreitung des zulässigen Gesamtgewichtes ein Losfahren des Motorrades unterbunden werden (Interlock Funktion).

Des Weiteren ist es möglich, dynamische Achslasten insbesondere beim Anfahren und/oder beim Anhalten des Zweirades von statischen Achslasten zu unterscheiden und für eine Anfahr- bzw. Bremshilfe beim Anfahren bzw. Bremsen heranzuziehen.

Auch im Falle einer Kollision kann die Kenntnis der Achslast genutzt werden. Aufgrund der plötzlichen Änderung der Achslast bei einer Kollision können gegebenenfalls passive Sicherheitssysteme ausgelöst werden. Außerdem können gegebenenfalls unterschiedliche Kollisionsarten unterschieden werden, die entsprechend zu unterschiedlichen Ausgangssignalen führen.

Die Achslast kann darüber hinaus gegebenenfalls zur Ermittlung des Reifendrucks am Vorder- und/oder Hinterrad herangezogen werden. Auf diese Weise kann eine Reifendruckkontrolle realisiert werden. Hierbei werden insbesondere dynamische Achslasten herangezogen, vorzugsweise bei Geradeausfahrt, wobei bedingt durch die Trägheit des Zweirads sowie der Räder unterschiedliche Reifendrücke einen unterschiedlich dynamischen Achslastverlauf zur Folge haben.

Gemäß einer weiteren zweckmäßigen Ausführung wird die Achslast sowohl an der linken als auch an der rechten Seite eines Rades bestimmt. Das Rad wird von einer Federgabel gehalten und geführt, die im linken und im rechten Gabelbereich jeweils einen Sensor zur Ermittlung der Achslast aufweist. Der Sensor befindet sich insbesondere zwischen der Radachse des Rades und der linken bzw. rechten Federgabelseite. Es kommen aber auch Ausführungen mit lediglich einem Sensor an einer Radseite in Betracht.

Die Verfahrensschritte zur Ermittlung des Schräglagenwinkels als Funktion der Achslast werden in einem Regel- bzw. Steuergerät im Zweirad durchgeführt. Das Zweirad ist ferner mit einer Sensorik versehen, welche die unmittelbare Ermittlung der Achslast ermöglicht. Darüber hinaus kann die Sensorik weitere Sensoren umfassen, insbesondere Raddrehzahlsensoren, einen Lenkwinkelsensor, einen Gierratensensor sowie gegebenenfalls diverse Beschleunigungssensoren zur Ermittlung der Längs-, Quer- und/oder Vertikaldynamik.

Weitere Vorteile und zweckmäßige Ausführungen sind den weiteren Ansprüchen, der Figurenbeschreibung und den Zeichnungen zu entnehmen. Es zeigen:

Fig. 1 ein Motorrad in Schräglage beim Durchfahren einer Kurve,

Fig. 2 die Kräfte und Momente am Vorderrad bei Schräglage in der Kurve und zugleich wirkender Bremskraft,

Fig. 3 ein Vorderrad mit der Aufhängung an der Federgabel über einen Bolzen mit integriertem Kraftsensor,

Fig. 4 der Bolzen mit integriertem Kraftsensor in Einzeldarstellung.

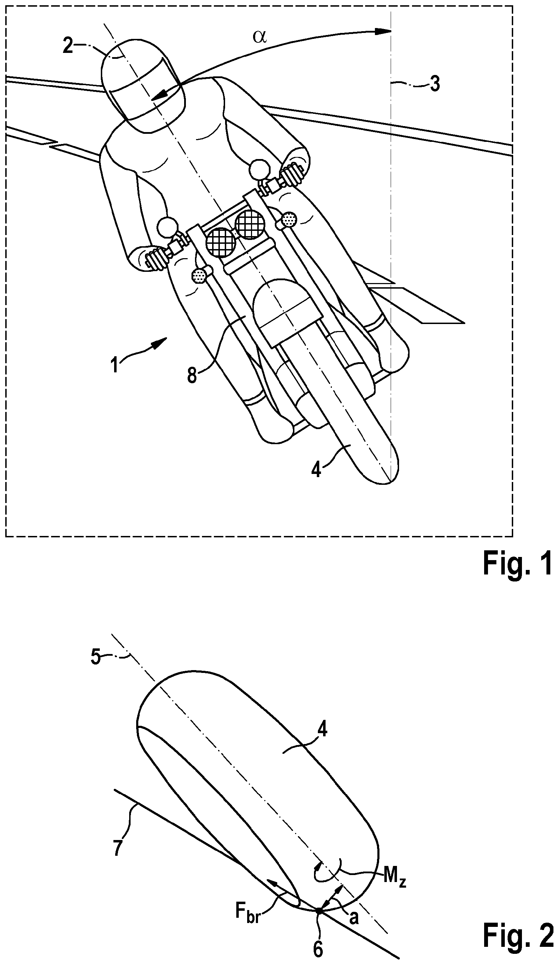

Fig. 1 zeigt ein Motorrad 1 bei Kurvenfahrt. Das Motorrad 1 befindet sich in Schräglage, der Neigungswinkel α kennzeichnet die Winkellage zwischen einer Fahrzeugmittelebene 2 und einer Vertikalen 3. Bei aufrechter Position des Motorrads 1 liegt die Fahrzeugmittelebene 2 in der Vertikalen 3.

Fig. 2 zeigt das Vorderrad 4 in Einzelstellung bei Schräglage. Aufgrund der Schräglage wandert der Reifenaufstandspunkt 6 des Reifens 4 auf der Fahrbahn 7 von der Reifenmitte, durch die die Lenkachse 5 verläuft, zur Reifenseite. Der Reifenaufstandspunkt 6 weist zur Reifenmitte den Abstand a auf, der den Störkrafthebelarm bildet. Wird das Vorderrad 4 abgebremst, wirkt im Reifenaufstandspunkt 6 die Bremskraft $F_{br}$, die gemeinsam mit dem Störkrafthebelarm a zu einem Lenkstörmoment $M_z$ die Hoch- bzw. Lenkachse führt, wobei das Lenkstörmoment bestrebt ist, das Motorrad aufzurichten.

Der Schräglagenwinkel φ stellt eine für die Fahrdynamik relevante Fahrzustandsgröße dar, die in einem oder mehreren Aggregaten bzw. Fahrzeugsystemen des Motorrads verwendet werden kann, insbesondere im Bremssystem, um den Bremsdruck selbsttätig einzustellen und hierdurch die Fahrsicherheit zu erhöhen. Der Schräglagenwinkel φ wird gemäß

$$\varphi = \alpha + \gamma$$

aus der Summe des Neigungswinkels α, der die Winkellage zwischen der Fahrzeugmittelebene 2 und der Vertikalen 3 bezeichnet, und einem Korrekturwinkel γ ermittelt, der durch die seitliche Verschiebung des Reifenaufstandspunktes 6 von der Fahrzeugmittelebene 2 zur Kurveninnenseite zustande kommt (Verschiebung a in Fig. 2). Der Neigungswinkel α kann gemäß

$$\alpha = \arcsin\left[\frac{F_R}{\sqrt{\frac{m^2 v^2}{r^2} + m^2 g^2}}\right] + \tan\left(\frac{-v^2}{rg}\right)$$

in Abhängigkeit der Gesamtmasse m von Motorrad einschließlich Fahrer und gegebenenfalls Beifahrer, des Kurvenradius r, der Motorradgeschwindigkeit v, der Erdbschleunigung g sowie der Achslast $F_R$ ermittelt werden.

Die Berechnungsvorschrift für den Neigungswinkel α kann gegebenenfalls im Regel- bzw. Steuergerät als Potenzreihenentwicklung dargestellt werden.

Der Kurvenradius r kann beispielsweise aus dem Lenkwinkel näherungsweise bestimmt werden. Zusätzlich oder alternativ ist es möglich, karten- oder navigationsbasierte Informationen zur Erfassung des Kurvenradius r zu verwenden.

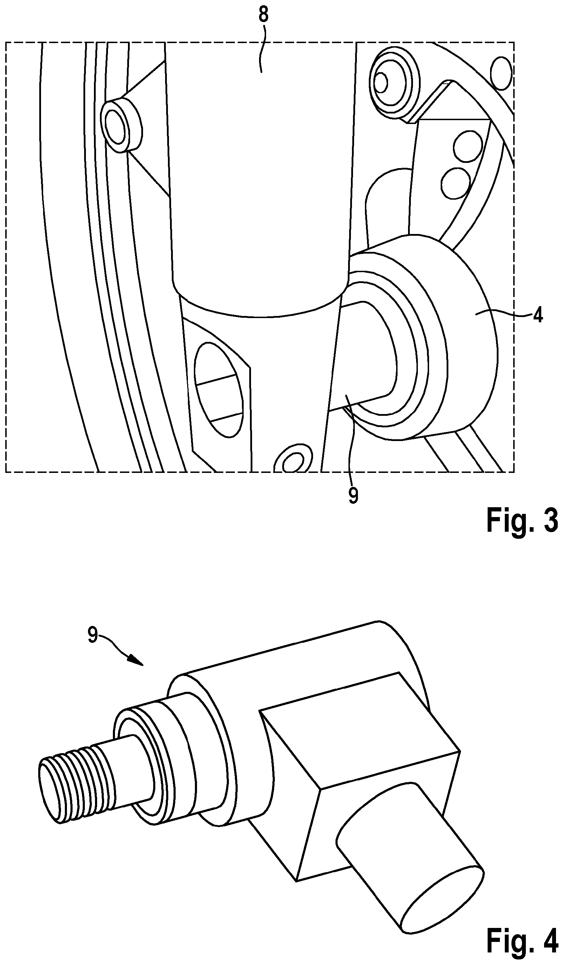

Die Achslast $F_R$ wird unmittelbar sensorisch ermittelt. Wie Fig. 3 in Verbindung mit Fig. 4 zu entnehmen, ist die Radachse des Vorderrades 4 über einen Achsbolzen 9 mit einer Federgabel 8 am Vorderrad des Motorrads gekoppelt, wobei der Achsbolzen 9 (iBolt) einen Kraftsensor umfasst, welcher geeignet ist, die in der Fahrzeugmittelebene 2 wirkende Achslast $F_R$ zu messen. Vorzugsweise befindet sich am linken und rechten Federgabelbereich jeweils ein entsprechender Achsbolzen 9 mit integriertem Kraftsensor, so dass die Achslast beidseitig an der Federgabel 8 gemessen werden kann. Des Weiteren kann es zweckmäßig sein, auch am Hinterrad eine entsprechende Sensorik zur Ermittlung der Achslast am Hinterrad, insbesondere sowohl im linken und rechten Hinterradbereich vorzusehen.

**Patentansprüche**

1. Verfahren zur Bestimmung des Schräglagenwinkels (φ) eines Zweirads (1), bei dem die Achslast an mindestens einem Rad ermittelt und der Schräglagenwinkel (φ) als Funktion der Achslast berechnet wird, **dadurch gekennzeichnet, dass** die Achslast unmittelbar sensorisch bestimmt wird.

2. Verfahren nach Anspruch 1, **dadurch gekennzeichnet, dass** die Achslast zumindest am Vorderrad (4) ermittelt und der Berechnung des Schräglagenwinkels (φ) zugrunde gelegt wird.

3. Verfahren nach Anspruch 2, **dadurch gekennzeichnet, dass** die Achslast sowohl am Vorderrad (4) als auch am Hinterrad ermittelt wird.

4. Verfahren nach einem der Ansprüche 1 bis 3, **dadurch gekennzeichnet, dass** die Achslast sowohl an der linken als auch an der rechten Seite des Rades (4) ermittelt wird.

5. Verfahren nach einem der Ansprüche 1 bis 4, **dadurch gekennzeichnet, dass** als Funktion der Achslast und/oder des Schräglagenwinkels (φ) der Bremsdruck an der Vorderrad- und/oder Hinterradbremse des Zweirads (1) moduliert wird.

6. Verfahren nach einem der Ansprüche 1 bis 5, **dadurch gekennzeichnet, dass** als Funktion der Achslast der Reifendruck am Vorder- (4) bzw. Hinterrad bestimmt wird.

7. Verfahren nach einem der Ansprüche 1 bis 6, **dadurch gekennzeichnet, dass** eine Reifendruckkontrolle in Abhängigkeit der Achslast und bei Geradeauslauf des Zweirads (1) durchgeführt wird.

8. Verfahren nach einem der Ansprüche 1 bis 7, **dadurch gekennzeichnet, dass** in Abhängigkeit der Achslast das Anfahrmoment bzw. das Bremsmoment beim Anfahren bzw. Anhalten moduliert wird.

9. Verfahren nach einem der Ansprüche 1 bis 8, **dadurch gekennzeichnet, dass** in Abhängigkeit der Achslast bei einem Fahrzeugunfall ein Fahrzeugunfallsystem im Zweirad (1) eingestellt wird.

10. Verfahren nach einem der Ansprüche 1 bis 9, **dadurch gekennzeichnet, dass** ein Neigungswinkel (α) als Funktion der Achslast bestimmt wird und der Schräglagenwinkel (φ) durch Addition des Nei-

gungswinkels ($\alpha$) und eines von der Reifenbreite abhängenden Korrekturwinkels ($\gamma$) ermittelt wird.

11. Zweirad mit einer Sensorik zur unmittelbaren Ermittlung der Achslast an mindestens einem Rad und mit einem Regel- bzw. Steuergerät zur Durchführung des Verfahrens nach einem der Ansprüche 1 bis 10.

12. Zweirad nach Anspruch 11, **dadurch gekennzeichnet, dass** die Sensorik an mindestens einer Achse zwei Sensoren links und rechts des Rades umfasst.

13. Zweirad nach Anspruch 11 oder 12, **dadurch gekennzeichnet, dass** die Sensorik mindestens einen Sensor zwischen einer Radachse und einer das Fahrzeugrad aufnehmenden Federgabel (8) umfasst.

**Claims**

1. Method for determining the lean angle ($\varphi$) of a two-wheeled vehicle (1), in the case of which method the axle load is determined at at least one wheel and the lean angle ($\varphi$) is calculated as a function of the axle load, **characterized in that** the axle load is determined directly by sensor.

2. Method according to Claim 1, **characterized in that** the axle load is determined at least at the front wheel (4) and forms the basis of the calculation of the lean angle ($\varphi$).

3. Method according to Claim 2, **characterized in that** the axle load is determined both at the front wheel (4) and at the rear wheel.

4. Method according to one of Claims 1 to 3, **characterized in that** the axle load is determined both on the left-hand side and on the right-hand side of the wheel (4).

5. Method according to one of Claims 1 to 4, **characterized in that** the brake pressure is modulated at the front wheel brake and/or rear wheel brake of the two-wheeled vehicle (1) as a function of the axle load and/or the lean angle ($\varphi$).

6. Method according to one of Claims 1 to 5, **characterized in that** the tyre pressure is determined at the front wheel (4) and/or rear wheel as a function of the axle load.

7. Method according to one of Claims 1 to 6, **characterized in that** a tyre pressure check is carried out in a manner which is dependent on the axle load and in the case of straight-ahead running of the two-wheeled vehicle (1).

8. Method according to one of Claims 1 to 7, **characterized in that** the starting torque and the braking torque are modulated in the case of starting off and stopping, respectively, in a manner which is dependent on the axle load.

9. Method according to one of Claims 1 to 8, **characterized in that**, in the case of a vehicle accident, a vehicle accident system is set in the two-wheeled vehicle (1) in a manner which is dependent on the axle load.

10. Method according to one of Claims 1 to 9, **characterized in that** an angle of inclination ($\alpha$) is determined as a function of the axle load, and the lean angle ($\varphi$) is determined by way of addition of the angle of inclination ($\alpha$) and a correction angle ($\gamma$) which is dependent on the tyre width.

11. Two-wheeled vehicle with a sensor system for the direct determination of the axle load at at least one wheel and with a regulating or control unit for carrying out the method according to one of Claims 1 to 10.

12. Two-wheeled vehicle according to Claim 11, **characterized in that** the sensor system on at least one axle comprises two sensors on the left and on the right of the wheel.

13. Two-wheeled vehicle according to Claim 11 or 12, **characterized in that** the sensor system comprises at least one sensor between a wheel axle and a suspension fork (8) which receives the vehicle wheel.

**Revendications**

1. Procédé de détermination de l'angle de position inclinée ($\varphi$) d'un deux-roues (1), avec lequel la charge d'essieu au niveau d'au moins une roue est identifiée et l'angle de position inclinée ($\varphi$) est calculé en fonction de la charge d'essieu, **caractérisé en ce que** la charge d'essieu est déterminée directement par détection.

2. Procédé selon la revendication 1, **caractérisé en ce que** la charge d'essieu est identifiée au moins au niveau de la roue avant (4) et sert de base au calcul de l'angle de position inclinée ($\varphi$).

3. Procédé selon la revendication 2, **caractérisé en ce que** la charge d'essieu est identifiée à la fois au niveau de la roue avant (4) et au niveau de la roue arrière.

4. Procédé selon l'une des revendications 1 à 3, **caractérisé en ce que** la charge d'essieu est identifiée à la fois du côté gauche et du côté droit de la roue (4).

**5.** Procédé selon l'une des revendications 1 à 4, **caractérisé en ce que** la pression de freinage au niveau du frein de roue avant et/ou de roue arrière du deux-roues (1) est modulée en fonction de la charge d'essieu et/ou de l'angle de position inclinée (φ).

**6.** Procédé selon l'une des revendications 1 à 5, **caractérisé en ce que** la pression de pneu au niveau de la roue avant (4) ou arrière est déterminée en fonction de la charge d'essieu.

**7.** Procédé selon l'une des revendications 1 à 6, **caractérisé en ce qu'**un contrôle de la pression de pneu est effectué en fonction de la charge d'essieu et lors d'un déplacement en ligne droite du deux-roues (1).

**8.** Procédé selon l'une des revendications 1 à 7, **caractérisé en ce que** le couple de démarrage ou le couple de freinage est modulé en fonction de la charge d'essieu lors du démarrage ou de l'arrêt.

**9.** Procédé selon l'une des revendications 1 à 8, **caractérisé en ce que** dans le cas d'un accident du véhicule, un système d'accident de véhicule est réglé dans le deux-roues (1) en fonction de la charge d'essieu.

**10.** Procédé selon l'une des revendications 1 à 9, **caractérisé en ce qu'**un angle d'inclinaison ($\alpha$) est déterminé en fonction de la charge d'essieu et l'angle de position inclinée ($\varphi$) est identifié en additionnant l'angle d'inclinaison ($\alpha$) et un angle de correction ($\gamma$) dépendant de la largeur des pneus.

**11.** Deux-roues comprenant un système de détection destiné à identifier directement la charge d'essieu au niveau d'au moins une roue et comprenant un régulateur ou un contrôleur destiné à mettre en œuvre le procédé selon l'une des revendications 1 à 10.

**12.** Deux-roues selon la revendication 11, **caractérisé en ce que** le système de détection comprend deux capteurs à gauche et à droite de la roue au niveau d'au moins un essieu.

**13.** Deux-roues selon la revendication 11 ou 12, **caractérisé en ce que** le système de détection comprend au moins un capteur entre un essieu de roue et une fourche à ressort (8) qui accueille la roue de véhicule.

**Fig. 1**

**Fig. 2**

8

Fig. 3

Fig. 4

**IN DER BESCHREIBUNG AUFGEFÜHRTE DOKUMENTE**

**In der Beschreibung aufgeführte Patentdokumente**

- DE 102011076640 A1
- DE 102008043794 A1
- EP 2641819 A1
- WO 2005107358 A2